# EUROPEAN PATENT APPLICATION

(11) **EP 4 810 358 A1**
(43) Date of publication of application: **23.09.2026**
(21) Application number: 25164377.1
(22) Date of filing: 18.03.2025
(51) Int. Cl.: B62D 55/28

(54) **ADJUSTABLE TRACTION SYSTEM FOR ATTACHMENT ON A TRACK BELT OF A CRAWLER VEHICLE**

(71) Applicant: pewag Schneeketten GmbH, 9371 Brückl (AT)
(72) Inventor: Zboril, Karel, 56201 Ústí nad Orlicí (CZ)
(74) Representative: Patentanwaltskanzlei Matschnig & Forsthuber OG

(57) **Abstract**

Adjustable traction system (1) for attachment on a track belt (2) of crawler vehicle (3) to increase its traction on slippery terrain, said track belt (2) having a given belt-width (W1, W2), wherein the adjustable traction system (1) comprises a first traction element (4) having a longitudinal extension (L1), and a closing element (5), said closing element (5) being configured to interlock with the first traction element (4) to fix the traction element (4) onto a track belt (2), wherein both the first traction element (4) and the closing element (5) comprise a U-shaped end-portion (4a, 5a) to engage with opposing side portions (2s1, 2s2) of a track belt (2), wherein the first traction element (4) comprises an interlocking section (4s) comprising one protrusion (4b) and one screw hole (4c), and wherein the closing element (5) is configured to selectively interlock with the first traction element (4) in a first or a second interlocked position (P1, P2).

## Description

The invention relates to a traction system for attachment on a track belt of a crawler vehicle to increase its traction on slippery terrain.

Generally speaking, traction systems for attachment on a track belt of a crawler vehicle are designed to enhance the mobility, stability, and performance of tracked vehicles operating in challenging terrains. Traction systems can serve a critical function by improving grip, reducing slippage, and optimizing weight distribution, thereby ensuring efficient movement over surfaces such as mud, snow, sand, or rocky terrain.

The primary purpose of traction system is to increase the vehicle's adaptability to different environmental conditions. By providing additional traction elements or modifying the contact surface between the track belt and the ground, these systems can significantly improve the vehicle's maneuverability and reduce wear on the original tracks.

In industrial, agricultural, and construction applications, crawler vehicles often encounter extreme conditions where standard tracks may struggle to maintain sufficient grip. The integration of an attachment-based traction system allows for quick adaptation without the need for permanent modifications, making it a versatile and cost-effective solution for enhancing vehicle performance.

Due to the necessity of ensuring a precise fit to the track belt, traction systems according to the prior art are available in various sizes, each tailored to a specific track belt dimension. In practice, companies operating crawler vehicles often have fleets with varying vehicle sizes and track belt widths, requiring multiple traction system variants.

Since the various crawler vehicles within a fleet are typically designated for different applications and the available workforce in a company is limited, it is rarely the case that all crawler vehicles are in operation simultaneously.

The objective of the present invention is to provide a traction system that provides full functionality while reducing complexity.

This object is achieved by an adjustable traction system for attachment on a track belt of a crawler vehicle to increase its traction on slippery terrain, said track belt having a given belt-width, wherein the adjustable traction system comprises a first traction element having a longitudinal extension, and a closing element, said closing element being configured to interlock with the first traction element to fix the traction element onto a track belt, wherein both the first traction element and the closing element comprise a U-shaped end-portion to engage with opposing side portions of a track belt, wherein the first traction element comprises an interlocking section comprising one protrusion and one screw hole, and wherein the closing element is configured to selectively interlock with the first traction element in a first or a second interlocked position, wherein the closing element comprises for this purpose a first and a second interlocking section, each interlocking section comprising one opening for receiving the protrusion of the first traction element and one screw hole for receiving a screw, wherein the first and the second interlocking section of the closing element are offset with regard to another along the longitudinal extension of the closing element to enable selection between a first and a second length configuration of the traction system by interlocking the interlocking section of the first traction element with the first or the second interlocking section of the closing element, wherein interlocking with the first interlocking section represents the first interlocked position and interlocking with the second interlocking section represents the second interlocking position.

This traction system according to the invention is adjustable and provides a traction system having full functionality and adaptability with reduced complexity.

Having two openings and screw holes on the closing element rather than on the traction element maximizes the area for traction means, avoids collection of dirt in the holes and minimizes the required length of welds.

Preferably the adjustable traction system comprises exactly one screw and additional mechanical stability is provided due to interlocking, wherein the protrusions can fit flush into the corresponding openings.

It is possible that the adjustable traction system comprises a screw for connecting the screw hole of the first traction element with a screw hole of the closing element.

It is possible that in the first length configuration the closing element ends flush with the ending of the first traction element resulting in full coverage of the closing element by the traction element.

The term "full coverage" refers to the upper side of the closing element that is exposed to the traction element. In a mounted configuration on the belt, the closing element is closer to the belt and the traction element is mounted on top. The term "flush ending" refers to the longitudinal length of the elements. Of course, the depth can also be flush.

It is possible that the traction element comprises a number of traction means protruding from its surface, said number being at least 6, in particular ranging between 7 and 15. The closing element can also have traction means.

It is possible that each traction mean has a trapezoidal side profile with a lower base and side flanks extending up to an exposed upper base, wherein the side flanks are tilted between by an angel ranging between 40° and 70° in relation to its lower base, wherein the upper base is shorter than the lower base. The traction means can have symmetrical side flanks.

It is possible that each traction mean has waves arranged on its surface, preferably with sharp edges, wherein both side flanks and the upper base comprise at least two waves.

The increased surface due to the waves results in less wear and is more aggressive on solid but slippery surfaces like ice.

It is possible that the traction means have a height ranging between 10 and 30 mm.

In particular, all the traction means can have the same height to distribute the load evenly.

It is possible that the adjustable traction system comprises traction means of a first kind, wherein the side flanks have equal length and the length of the upper base ranges between 80% to 120% of the length of the side flanks.

It is possible that the adjustable traction system comprises traction means of a second kind, wherein the length of the upper base ranges between 150% to 500% of the length of the side flanks.

It is possible that the adjustable traction system comprises traction means of a third kind, wherein the length of the upper base ranges between 150% to 500% of the length of the side flanks and wherein in a middle portion of the upper base each traction mean of the third kind comprises a groove, said groove being configured to interlock with connectable external traction means.

It is possible that the adjustable traction system furthermore comprises the external traction means to interlock with the groove of the traction means of the third kind.

It is possible that the longitudinal extension of the first traction element ranges between 40 and 120 cm, in particular between 50 and 80 cm.

It is possible that the first and the second interlocking section of the closing element are offset with regard to another along the longitudinal extension by between 5 and 15 cm, in particular exactly 10 cm, wherein both the first and the second interlocked position the second interlocking section is closer to the center of the longitudinal extension of the first traction element than the first interlocking section.

It is possible that the adjustable traction system comprises a second traction element being attachable to the closing element when the closing element is to be connected to the first traction element in the second interlocking position, wherein the second traction element comprises a first hooking protrusion that is designed to slide at least partially under the opening of the first interlocking section blocking a removal from the closing element in a vertical direction, and wherein the second traction element further comprises a second hooking protrusion that is designed to extend into the opening of the second interlocking section below the first traction element such that if the first traction element is mounted onto the closing element in the second interlocking position a fixation by the screw by engaging with the screw hole of the second interlocking section fixes the second traction element onto the closing element, wherein preferably the vertical extension of the second traction element from the closing element is lower than the vertical extension of the first traction element and/or wherein preferably in the second interlocking position the screw covers the screw hole of the second interlocking section and the remaining openings and the remaining screw hole is covered by either the combination of the first and second traction element.

Advantages of using a second traction element are: more traction and reduces the risk of dirt and stones getting pushed into the system by covering of the openings and the remaining screw hole. It is possible that the second traction element has a lower profile than the first traction element. As a result, the second traction element is prone to less torque during use and therefore the fixation simply by protrusions can still provide sufficient stability in connection with the first traction element mounted on the closing element thus fixing the second traction element in place. As a result, only one screw is required to assemble the adjustable traction system, no matter if it is assembled in the first or the second interlocked position.

It is possible that the U-shaped end-portions of the first traction element and the closing element each have a base section, an upper section and a lower leg, wherein the lower leg has a surface that is designed to slide under the side portion of the track belt, wherein these surfaces are tilted in a manner that the distance between the upper section and the lower leg decreases with decreasing distance to the base section. This allows smooth fixation on the track belt and also increased fixation in their final mounted position.

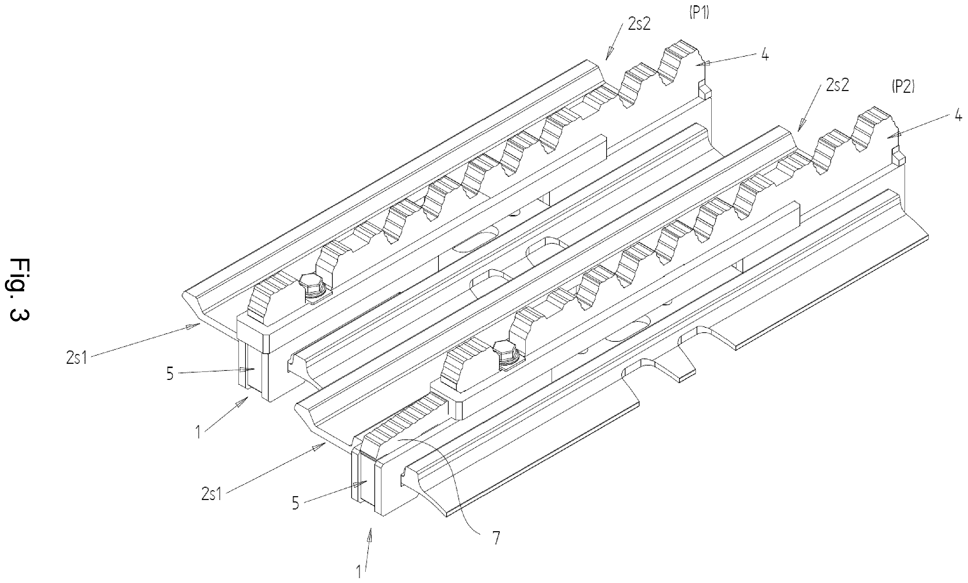

The adjustable traction system can typically sit on a plate that comprises two or more ribs. In detail, it can be mounted between neighboring ribs and the belt can comprise a plurality of plates that are mounted next to each other side by side essentially along the entire circumference of the belt with minor gaps between the paltes. The traction system is then mounted on a plate next to one of the ribs, in particular between two neighboring ribs in case of a two or three-rib design (see Fig. 3). In the case of a three-rib design one plate basically can theoretically carry two tractions systems but in practice you would like to have a maximum of ground pressure on the traction system. Therefore, typically the traction systems are mounted in a distance to another that optimizes the ground pressure on the traction system. For instance, it can be optimized to receive about between 1 and 3 tons of weight applied on each traction system that is contact with the ground and/or at least two or three traction systems engage with the ground at the same time.

Moreover, the closing element and also the first traction element can comprise welding plates with welding holes fixed on its side walls. They increase the stability of the elements. In particular, in case of the closing element the welding plates enhance the structural strength and increase the stability of the closing element in particular in areas around the interlocking sections, in particular the openings and screw holes. The openings are not affected by the welding plates since the welding holes are offset from the openings. Also, the opening in the closing element can be easier accomplished as such by being covered by the welding plates.

The first and the second traction element and the closing element can be made of steel, it can have a Vickers Hardness HV for instance of 450. The hardness can also vary depending on the specific requirements of the traction system. For instance, boron steel 27MnCrB5 can be used. This steel can be hardened to a hardness of 58-62 HRC (600-700 HV), but after tempering, typically, a hardnesses of 550-650 HV can be achieved. Depending on the specific requirements, for instance a range between 450 and 650 HV can provide good results. The steel can be hardened by quenching. In particular, boron steel can be applied.

Furthermore, the invention relates to a track belt comprising a number of adjustable traction systems according to any of the claims according to the present invention mounted onto the track belt.

Also, the invention relates to a crawler vehicle comprising two track belts as mentioned above.

In the following, in order to further demonstrate the present invention, illustrative and non-restrictive embodiments are discussed, as shown in the drawings, which show:
Fig. 1 shows an exemplary crawler vehicle having two track belts and a number of traction systems according to the invention mounted on the track belts,
Fig. 2 shows an exemplary crawler vehicle having two track belts and a number of traction systems according to the invention mounted on the track belts, wherein the track belts have a greater width than the width of the track belts of Fig. 1,
Fig. 3 two exemplary 3-rib plate designs, wherein each can be part of a track belt having one traction system mounted on the 3-rib plate design,
Fig. 4 an exploded view of a traction system according to the invention,
Fig. 5 a perspective view of the traction system of Fig. 4 in a first interlocked position,
Fig. 6 another perspective view of the traction system of Fig. 5,
Fig. 7 an exploded view of a traction system including a second traction element,
Fig. 8 a perspective view of the traction system of Fig. 7 in a second interlocked position,
Fig. 9 a perspective view of the traction system of Fig. 8 with external (i.e. additional) traction means to be mounted on the first traction element,
Fig. 10 a perspective view of the traction system of Fig. 9 with the external traction means mounted on the first traction element,
Fig. 11 a detailed view of the profile of traction means, and
Fig. 12 a detailed view of the U-shaped end-portion of the closing element (the U-shaped end-portion of the first traction element can have a similar design).

In the following figures identical reference signs refer to identical features unless expressly depicted otherwise. The reference signs are only for informational purpose and do not delimit the scope of protection.

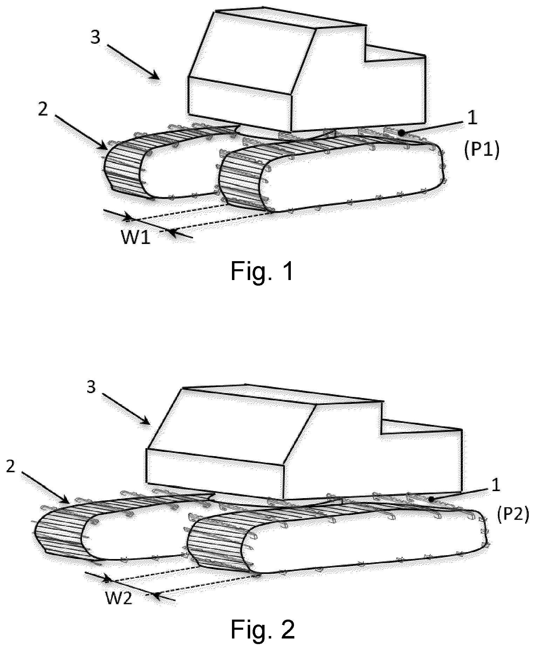

Fig. 1 shows an exemplary crawler vehicle 3 having two track belts 2 and a number of traction systems 1 according to the invention mounted on the track belts 2 with a belt-width W1.

Fig. 2 shows an exemplary crawler vehicle 3 having two track belts 2 and a number of traction systems 1 according to the invention mounted on the track belts 2, wherein the track belts 2 have a greater width W2 than the width W1 of the track belts 2 of Fig. 1.

Fig. 3 show two examples of 3-rib plate-designs, each being designed to be part part of a track belt 2. Each plate has side portions 2s1 and 2s2, said side portions constituting the side portions of a corresponding belt 2 that can comprise a row of such plates that are mounted onto the outer section of the belt 2 and configured to receive traction systems 1 according to the invention. The plate on the left as a lower width corresponding for instance to the belt 2 of Fig. 1 and the plate on the right has a greater width corresponding for instance to the belt 2 of Fig. 2.

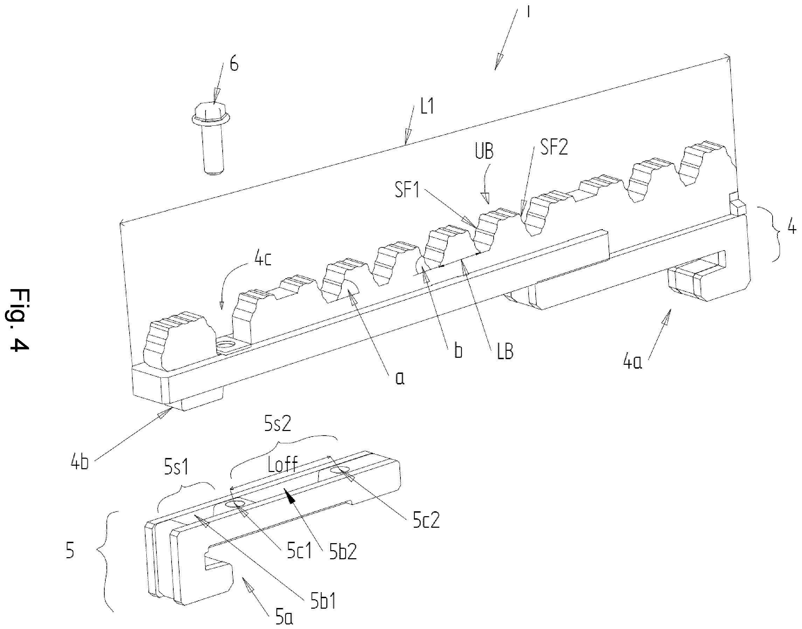

The invention will now be described in detail based on Fig. 4 showing an exploded view of a traction system 1 according to the invention. The traction system 1 is adjustable for attachment on a track belt 2 of a crawler vehicle 3 to increase its traction on slippery terrain, said track belt 2 having a given belt-width W1 or for instance W2.

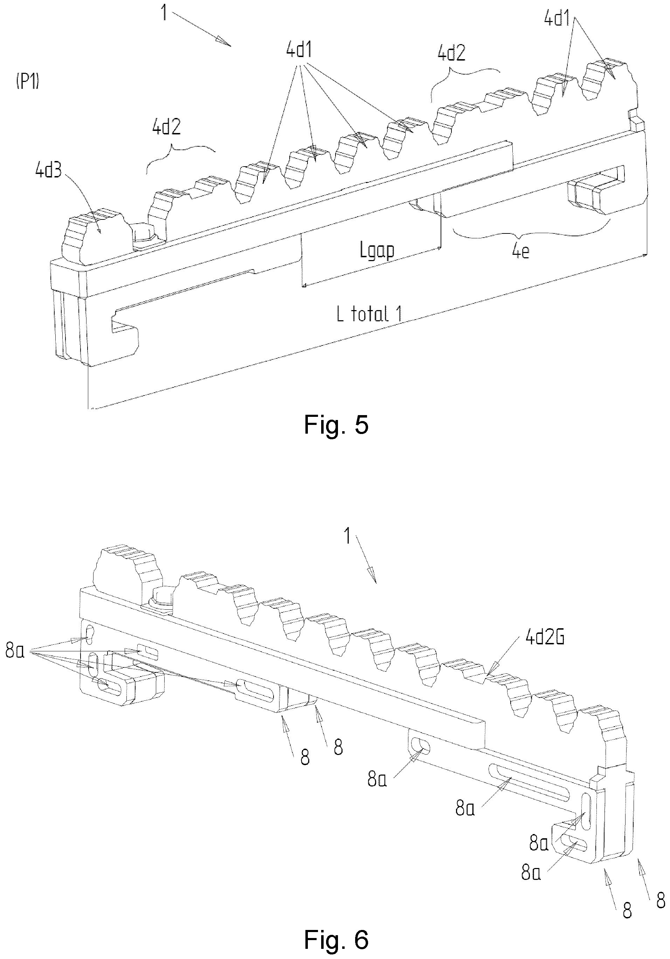

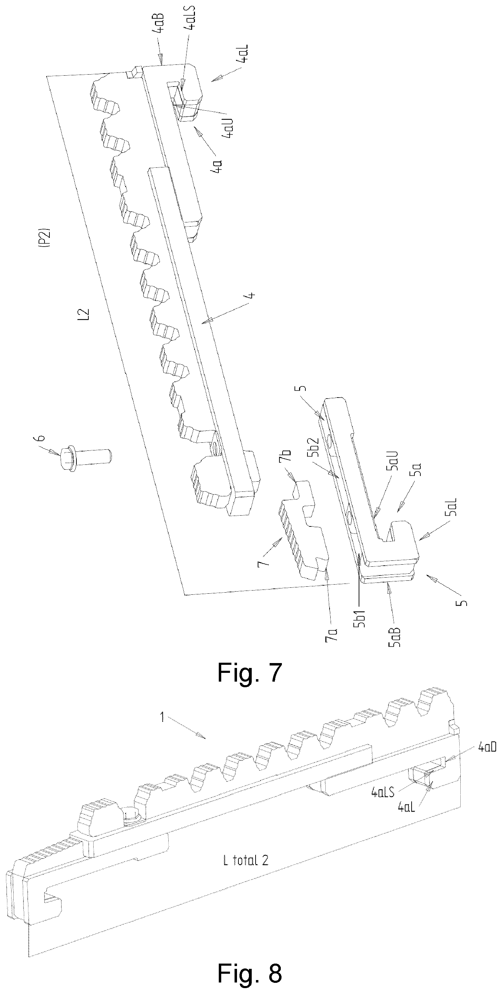

The adjustable traction system 1 comprises a first traction element 4 having a longitudinal extension L1, and a closing element 5, said closing element 5 being configured to interlock with the first traction element 4 to fix the traction element 4 onto a track belt 2 (not shown in Fig. 4). Both the first traction element 4 and the closing element 5 comprise a U-shaped end-portion 4a, 5a to engage with opposing side portions 2s1, 2s2 of a track belt 2. The first traction element 4 comprises an interlocking section 4s comprising one protrusion 4b and one screw hole 4c. The closing element 5 is configured to selectively interlock with the first traction element 4 in a first or a second interlocked position P1 (see for instance Fig. 5) or P2 (see for instance Fig. 8). The closing element 5 comprises for this purpose a first and a second interlocking section 5s1 and 5s2. Each interlocking section 5s1, 5s2 comprises one opening 5b1, 5b2 for receiving the protrusion 4b of the first traction element 4 and one screw hole 5c1, 5c2 for receiving a screw 6. The first and the second interlocking section 5s1, 5s2 of the closing element 5 are offset with regard to another along the longitudinal extension L1 of the closing element 5 to enable selection between a first and a second length configuration Ltotal1, Ltotal2 (see Fig. 8) of the traction system 1 by interlocking the interlocking section 4s of the first traction element 4 with the first or the second interlocking section 5s1, 5s2 of the closing element. Interlocking with the first interlocking section 5s1 represents the first interlocked position P1 and interlocking with the second interlocking section 5s2 represents the second interlocking position P2. These two length configurations allow that to adjust the adjustable traction system 1 to the width of a track belt 2.

The adjustable traction system 1 can comprise a screw 6 for connecting the screw hole 4c of the first traction element 4 with a screw hole 5c1, 5c2 of the closing element 5. The longitudinal extension L1 of the first traction element 4 can range between 40 and 120 cm, in particular between 50 and 80 cm.

The first and the second interlocking section 5s1, 5s2 of the closing element 5 can be offset with regard to another along the longitudinal extension L1 by a length Loff ranging between 5 and 15 cm, in particular exactly 10 cm, wherein both the first and the second interlocked position P1, P2 the second interlocking section 5s2 is closer to the center of the longitudinal extension L1 of the first traction element 4 than the first interlocking section 5s1.

Fig. 5 shows a perspective view of the traction system 1 of Fig. 4 in the first interlocked position P1 thus achieving the first length configuration Ltotal1. In this configuration, the closing element 5 can end flush with the ending of the first traction element 4 resulting in full coverage of the closing element 5 by the traction element 4. The term "full coverage" refers to the upper side of the closing element 5, namely the side that is exposed to the traction element. In a mounted configuration on the track belt 2 the closing element 5 is closer to the belt 2 and the first traction element 4 is mounted on top. The term "flush ending" refers to the longitudinal length of the elements. Of course, the depth can also be flush.

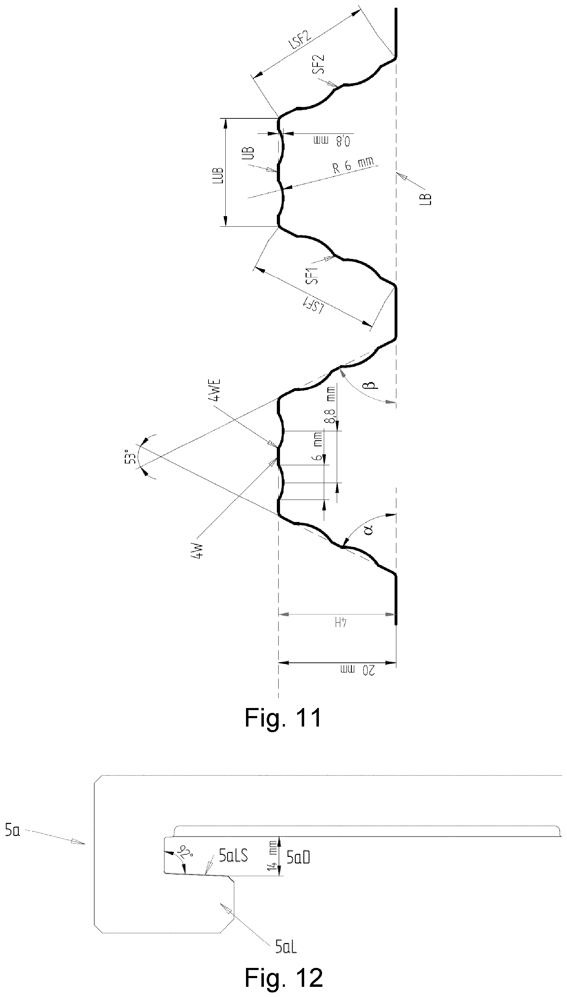

The traction element 4 comprises a number of traction means 4d1, 4d2, 4d3 protruding from its surface, said number being at least 6, in particular ranging between 7 and 15. Each traction mean 4d1, 4d2, 4d3 has a trapezoidal side profile with a lower base LB (see Fig. 11) and side flanks SF1, SF2 extending up to an exposed upper base UB, wherein the side flanks SF1, SF2 are tilted between by an angel α (for SF1) and β (for SF2) ranging between 40° and 70° in relation to its lower base LB, wherein the upper base UB is shorter than the lower base. The traction means 4d1, 4d2, 4d3 can have symmetrical side flanks, i.e. α = β.

The traction means 4d1, 4d2, 4d3 has waves 4W arranged on its surface, preferably with sharp edges 4WE, wherein both side flanks SF1, SF2 and the upper base UB comprise at least two waves 4W. Exemplary measurements in mm are shown in Fig. 11. 7. Adjustable traction system 1 according to any of the claims 4 to 6, wherein the traction means 4d1, 4d2, 4d3 have a height 4H ranging between 10 and 30 mm. In particular all the traction means 4d1, 4d2, 4d3 can have the same height 4H to distribute the load evenly.

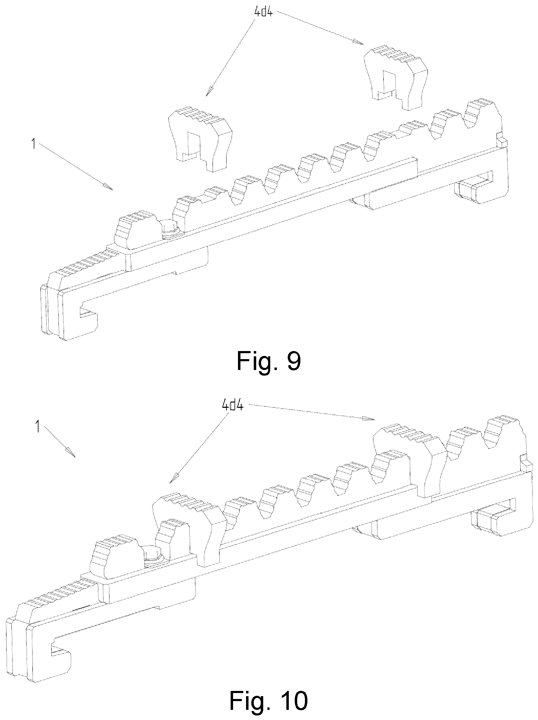

Taking a closer look back at Fig. 5 again, it can be seen that the adjustable traction system 1 can comprise traction means of a first kind 4d1, wherein the side flanks SF1, SF2 have equal length LSF1, LSF2 and the length LUB of the upper base UB ranges between 80% to 120% of the length of the side flanks LSF1, LSF2. Moreover, it can comprise traction means of a second kind 4d2, wherein the length LUB of the upper base UB ranges between 150% to 500% of the length of the side flanks LSF1, LSF2. Also, it can comprise traction means of a third kind 4d3, wherein the length LUB of the upper base UB ranges between 150% to 500% of the length of the side flanks LSF1, LSF2 and wherein in a middle portion of the upper base UB each traction mean of the third kind comprises a groove 4d2G, said groove 4d2G being configured to interlock with connectable external traction means 4d4 (see Fig. 9 and 10). The external traction means 4d4 to interlock with the groove 4d2G of the traction means of the third kind 4d3. The external traction means 4d4 can have an U-shaped profile wherein its side flanks enclose the groove 4d2G and the base of the traction means 4d4 protrudes above to increase traction. It can be oriented orthogonal to the traction means 4d4.

Between the closing element 5 and a lower section 4e of the traction element 4 there is a gap having a length Lgap that can be greater than 10 cm. In particular, it can be greater than 12 cm, even in case of the first interlocked position P1 as shown in Fig. 5. In the second interlocked position P2 this length Lgap widens even further. This gap give space screws that are usually arranged in the center of a rib plate, said rib plate being an removable but yet essential part of the track belt 2 and serving as a basis for mounting the traction system 1 onto the belt track 2. Preferably, this gap is centered with the middle of the total length Ltotal1 of the traction system in the first interlocking position P1. Same considerations can also apply in the second interlocking position P2.

Fig. 7 shows an exploded view of a traction system 1 including a second traction element 7. The second traction element 7 is attachable to the closing element 5 when the closing element 5 is to be connected to the first traction element 4 in the second interlocking position P2, wherein the second traction element 7 comprises a first hooking protrusion 7a that is designed to slide at least partially under the opening 5b1 of the first interlocking section 5s1 blocking a removal from the closing element 5 in a vertical direction, an wherein the second traction element 7 further comprises a second hooking protrusion 7b that is designed to extend into the opening 5b2 of the second interlocking section 5s2 below the first traction element 4 such that if the first traction element 4 is mounted onto the closing element 5 in the second interlocking position P2 a fixation by the screw 6 by engaging with the screw hole of the second interlocking section 5s2 fixes the second traction element 7 onto the closing element 5, wherein preferably the vertical extension of the second traction element 7 from the closing element 5 is lower than the vertical extension of the first traction element 4 and/or wherein preferably in the second interlocking position P2 the screw 6 covers the screw hole 5c2 of the second interlocking section 5s2 and the remaining openings 5b1, 5b2 and the remaining screw hole 5c1 is covered by either the combination of the first and second traction element 4, 7.

Advantages of using a second traction element 7 are: more traction and reduces the risk of dirt and stones getting pushed into the system by covering of the openings and the remaining screw hole 5c1. It is possible that the second traction element has a lower profile than the first traction element 4. As a result, the second traction element 7 is prone to less torque during use and therefore the fixation simply by protrusions can still provide sufficient stability in connection with the first traction element 4 mounted on the closing element 5 thus fixing the second traction element 7 in place. As a result, only one screw 6 is required to assemble the adjustable traction system 1, no matter if it is assembled in the first P1 or the second interlocked position P2.

Fig. 12 shows a detailed view of the U-shaped end-portion 5a of the closing element 5 (it is noted that the U-shaped end-portion 4a of the first traction element 4 can have a similar design; corresponding reference numerals of the first traction element see Fig. 8). The U-shaped end-portions 4a, 5a of the first traction element 4 and the closing element 5 each have a base section 4aB, 5aB, an upper section 4aU, 5aU and a lower leg 4aL, 5aL, wherein the lower leg has a surface 4aLS, 5aLS that is designed to slide under the side portion 2s1, 2s2 (see Fig. 3) of the track belt 2, wherein these surfaces 4aLS, 5aLS are tilted in a manner that the distance 4aD, 5aD between the upper section 4aU, 5aU and the lower leg 4aL, 5aL decreases with decreasing distance to the base section 4aB, 5aB. This allows a smooth fixation on the track belt and also increased fixation in their final mounted position. This means that the sidewalls of the gap can be tilted with regard to each other enclosing a angle between 1° and 5° and tilted in a manner that the distance widens towards the middle of the traction system 1.

The distances 4aD and 5aD can typically range between 1 and 2,5 cm, depending on the dimensions of the rib plate.

Taking a closer look at Fig. 6, it is noted that the closing element 5 and also the first traction element 4 can comprise welding plates 8 with welding holes on their side walls. The welding plates8 increase the stability of the elements 4 and 5. In particular, in case of the closing element 5 the welding plates 8 enhance the structural strength and increase the stability of the closing element 5 in particular in areas around the interlocking sections 5s1 and 5s2, in particular the openings 5b1, 5b2 and screw holes 5c1, 5c2. The welding plates 8 do not interfere negatively with the openings 5b1, 5b2 since welding holes 8a are offset from the openings. Therefore, the weld (hidden within the welding holes 8a) neither protrudes into the openings 5b1, 5b2 nor does it have any other negative impact on the design. Also, the openings 5b1, 5b2 in the closing element 5 can be easier accomplished as such by being covered by the welding plates 8.

Moreover, the invention can also relate to a track belt 2 comprising a number of adjustable traction systems 1 according to the invention and/or to a crawler vehicle 3 comprising two track belts 2 as mentioned.

The invention is not limited to the embodiments shown but is defined by the entire scope of protection of the claims. Individual aspects of the invention or of the embodiments can also be taken up and combined with one another. Any reference signs in the claims are exemplary and serve only the purpose of allowing easier review without restricting the claims.

### List of reference numerals (for informational purposes only)

**1** Adjustable traction system
**2** Track belt
**2s1, 2s2** Side portions of the track belt
**3** Crawler vehicle
**4** First traction element
**4a** U-shaped end-portion of the first traction element
**4aB** Base section of the first traction element
**4aU** Upper section of the first traction element
**4aL** Lower leg of the first traction element
**4aLS** Surface of the lower leg of the first traction element
**4aD** Distance between the upper section and lower leg of the first traction element
**4b** Protrusion of the first traction element
**4c** Screw hole of the first traction element
**4d1, 4d2, 4d3** Traction means of the first traction element
**4d2G** Groove for external traction means
**4d4** External traction means
**4e** Lower section of the first traction element
**4H** Height of the traction means
**4s** Interlocking section of the first traction element
**4W** Waves on the traction means
**4WE** Sharp edges of the waves
**5** Closing element
**5a** U-shaped end-portion of the closing element
**5aB** Base section of the closing element
**5aU** Upper section of the closing element
**5aL** Lower leg of the closing element
**5aLS** Surface of the lower leg of the closing element
**5aD** Distance between the upper section and lower leg of the closing element
**5b1**, Openings of the closing element for receiving the protrusion of the first traction
**5b2** element
**5c1, 5c2** Screw holes of the closing element
**5s1, 5s2** First and second interlocking sections of the closing element
**6** Screw
**7** Second traction element
**7a** First hooking protrusion of the second traction element
**7b** Second hooking protrusion of the second traction element
**8** Welding plate
**8a** Welding hole
**LB** Lower base of the traction means
**L1** Longitudinal extension of the first traction element
**LUB** Length of the upper base of the traction means
**LSF1, LSF2** Length of the side flanks of the traction means
**Lgap** Gap length between the closing element and lower section of the first traction element
**Loff** Offset length between the interlocking sections
**Ltotal1,** Total length of the traction system in the first and second interlocked
**Ltotal2** position
**P1**, **P2** First and second interlocked position
**SF1, SF2** Side flanks of the traction means
**UB** Upper base of the traction means
**W1**, **W2** Belt-width
**α**, **β** Angle of the side flanks of the traction means

## Claims

1. Adjustable traction system (1) for attachment on a track belt (2) of a crawler vehicle (3) to increase its traction on slippery terrain, said track belt (2) having a given belt-width (W1, W2), wherein the adjustable traction system (1) comprises
- a first traction element (4) having a longitudinal extension (L1), and
- a closing element (5), said closing element (5) being configured to interlock with the first traction element (4) to fix the traction element (4) onto a track belt (2),
wherein both the first traction element (4) and the closing element (5) comprise a U-shaped end-portion (4a, 5a) to engage with opposing side portions (2s1, 2s2) of a track belt (2),
wherein the first traction element (4) comprises an interlocking section (4s) comprising one protrusion (4b) and one screw hole (4c),
and wherein the closing element (5) is configured to selectively interlock with the first traction element (4) in a first or a second interlocked position (P1, P2), wherein the closing element (5) comprises for this purpose a first and a second interlocking section (5s1, 5s2), each interlocking section (5s1, 5s2) comprising one opening (5b1, 5b2) for receiving the protrusion (4b) of the first traction element (4) and one screw hole (5c1, 5c2) for receiving a screw (6),
wherein the first and the second interlocking section (5s1, 5s2) of the closing element (5) are offset with regard to another along the longitudinal extension (L1) of the closing element (5) to enable selection between a first and a second length configuration (Ltotal1, Ltotal2) of the traction system (1) by interlocking the interlocking section (4s) of the first traction element (4) with the first or the second interlocking section (5s1, 5s2) of the closing element, wherein interlocking with the first interlocking section (5s1) represents the first interlocked position (P1) and interlocking with the second interlocking section (5s2) represents the second interlocking position (P2).

2. Adjustable traction system (1) according to claim 1, comprising a screw (6) for connecting the screw hole (4c) of the first traction element (4) with a screw hole (5c1, 5c2) of the closing element (5).

3. Adjustable traction system (1) according to any of the preceding claims, wherein in the first length configuration (Ltotal1) the closing element (5) ends flush with the ending of the first traction element (4) resulting in full coverage of the closing element (5) by the traction element (4).

4. Adjustable traction system (1) according to any of the preceding claims, wherein the traction element (4) comprises a number of traction means (4d1, 4d2, 4d3) protruding from its surface, said number being at least 6, in particular ranging between 7 and 15.

5. Adjustable traction system (1) according to claim 4, wherein each traction mean (4d1, 4d2, 4d3) has a trapezoidal side profile with a lower base (LB) and side flanks (SF1, SF2) extending up to an exposed upper base (UB), wherein the side flanks (SF1, SF2) are tilted between by an angel (α, β) ranging between 40° and 70° in relation to its lower base, wherein the upper base (UB) is shorter than the lower base.

6. Adjustable traction system (1) according to claim 5, wherein each traction means (4d1, 4d2, 4d3) has waves (4W) arranged on its surface, preferably with sharp edges (4WE), wherein both side flanks (SF1, SF2) and the upper base (UB) comprise at least two waves (4W).

7. Adjustable traction system (1) according to any of the claims 4 to 6, wherein the traction means (4d1, 4d2, 4d3) have a height (4H) ranging between 10 and 30 mm.

8. Adjustable traction system (1) according to any of the claims 5 to 7, wherein the adjustable traction system (1) comprises traction means of a first kind (4d1), wherein the side flanks (SF1, SF2) have equal length (LSF1, LSF2) and the length (LUB) of the upper base (UB) ranges between 80% to 120% of the length of the side flanks (LSF1, LSF2).

9. Adjustable traction system (1) according to any of the claims 5 to 8, wherein the adjustable traction system (1) comprises traction means of a second kind (4d2), wherein the length (LUB) of the upper base (UB) ranges between 150% to 500% of the length of the side flanks (LSF1, LSF2).

10. Adjustable traction system (1) according to any of the claims 5 to 9, wherein the adjustable traction system (1) comprises traction means of a third kind (4d3), wherein the length (LUB) of the upper base (UB) ranges between 150% to 500% of the length of the side flanks (LSF1, LSF2) and wherein in a middle portion of the upper base (UB) each traction mean of the third kind comprises a groove (4d2G), said groove (4d2G) being configured to interlock with connectable external traction means (4d4).

11. Adjustable traction system (1) according to claim 10, comprising the external traction means (4d4) to interlock with the groove (4d2G) of the traction means of the third kind (4d3).

12. Adjustable traction system (1) according to any of the preceding claims, wherein the longitudinal extension (L1) of the first traction element (4) ranges between 40 and 120 cm, in particular between 50 and 80 cm.

13. Adjustable traction system (1) according to any of the preceding claims, wherein the first and the second interlocking section (5s1, 5s2) of the closing element (5) are offset with regard to another along the longitudinal extension (L1) by a length (Loff) ranging between 5 and 15 cm, in particular exactly 10 cm, wherein both the first and the second interlocked position (P1, P2) the second interlocking section (5s2) is closer to the center of the longitudinal extension (L1) of the first traction element (4) than the first interlocking section (5s1).

14. Adjustable traction system (1) according to any of the preceding claims, comprising a second traction element (7) being attachable to the closing element (5) when the closing element (5) is to be connected to the first traction element (4) in the second interlocking position (P2), wherein the second traction element (7) comprises a first hooking protrusion (7a) that is designed to slide at least partially under the opening (5b1) of the first interlocking section (5s1) blocking a removal from the closing element (5) in a vertical direction, an wherein the second traction element (7) further comprises a second hooking protrusion (7b) that is designed to extend into the opening (5b2) of the second interlocking section (5s2) below the first traction element (4) such that if the first traction element (4) is mounted onto the closing element (5) in the second interlocking position (P2) a fixation by the screw (6) by engaging with the screw hole of the second interlocking section (5s2) fixes the second traction element (7) onto the closing element (5), wherein preferably the vertical extension of the second traction element (7) from the closing element (5) is lower than the vertical extension of the first traction element (4) and/or wherein preferably in the second interlocking position (P2) the screw (6) covers the screw hole (5c2) of the second interlocking section (5s2) and the remaining openings (5b1, 5b2) and the remaining screw hole (5c1) is covered by either the combination of the first and second traction element (4, 7).

15. Adjustable traction system (1) according to any of the preceding claims, wherein the U-shaped end-portions (4a, 5a) of the first traction element (4) and the closing element (5) each have a base section (4aB, 5aB), an upper section (4aU, 5aU) and a lower leg (4aL, 5aL), wherein the lower leg has a surface (4aLS, 5aLS) that is designed to slide under the side portion (2s1, 2s2) of the track belt (2), wherein these surfaces (4aLS, 5aLS) are tilted in a manner that the distance (4aD, 5aD) between the upper section (4aU, 5aU) and the lower leg (4aL, 5aL) decreases with decreasing distance to the base section (4aB, 5aB).
